Europäisches Patentamt

(19) European Patent Office

Office européen des brevets

(11) Publication number: **0 235 199 B1**

(12) **EUROPEAN PATENT SPECIFICATION**

(45) Date of publication of patent specification:
27.02.91 Bulletin 91/09

(51) Int. Cl.⁵: **G06F 13/42**

(21) Application number: 86905114.4

(22) Date of filing: 13.08.86

(86) International application number:
PCT/US86/01660

(87) International publication number:
WO 87/01484 12.03.87 Gazette 87/06

(54) COMMUNICATION PROTOCOL SELECTION FOR DATA PROCESSING SYSTEM.

(30) Priority: 03.09.85 US 772225

(43) Date of publication of application:
09.09.87 Bulletin 87/37

(45) Publication of the grant of the patent:
27.02.91 Bulletin 91/09

(84) Designated Contracting States:
DE FR GB

(56) References cited:
EP-A- 0 068 831
WO-A-20/3285
Patent Abstracts of Japan, volume 6, no. 104
(P-122)(982), 15 June 1982
EDN Electrical Designs News, volume 25, no.
3, February 1980, (Denver, US). Bonney: "For
uP-system data entry, thumbwheel switches
excel", pages 161-165

(73) Proprietor: NCR CORPORATION
World Headquarters
Dayton, Ohio 45479 (US)

(72) Inventor: FINFROCK, Don, C.
1511 Clairmont Avenue
Cambridge, OH 43725 (US)
Inventor: GIRARD, Donald, J.
68485 Lovers Lane
Cambridge, OH 43725 (US)

(74) Representative: Robinson, Robert George
International Patent Department NCR Limited
206 Marylebone Road
London NW1 6LY (GB)

## Description

### Technical field

The present invention relates to a data processing system, and to a method for establishing communication protocols for a data processing system. The invention has application, for example, to a local area network communication system which includes a plurality of processing devices connected to a common communication channel for enabling data to be transferred between the processing devices and a host processing device.

### Background Art

With the advent of low cost data processing devices such as personal computers, point-of-sale data terminal devices, etc., local communication networks have been developed to handle a large number of processing devices that may be used within a local business environment. In prior data processing systems, because of the complexity of the communication protocol associated with each processing device, a single communication protocol has been utilized for each data processing system. Thus, if a processing device were added to a processing system after the system had been installed and in operation, such processing device would have been required to operate with the same communication protocol as that of the other processing devices in the system. This restriction has limited the sales appeal of such prior data processing systems.

### Disclosure of the Invention

It is therefore an object of the invention to provide a data processing system for transferring data between a host processor and a plurality of remote processing devices, in which the system can be reallidy modified so that the remote processing devices can operate under different communication protocols.

According to the invention there is provided a data processing system for transmitting data between a host processing device and a plurality of remote processing devices, including a communication channel coupled to said host processing device, characterized by storage means coupled to said host processing device for storing a plurality of sets of program instructions corresponding to a number of different communication protocols, and a plurality of controllers coupled to said communication channel for controlling the transfer of data between said host processing device and said remote processing devices, each controller including : manually settable switch means settable to a plurality of positions in each of which said switch means causes said controller to output data representing different address data ; and processing means arranged to transmit over said communication channel to said host processing device the address data determined by said switch means so as to enable said host processing device, using this address data, to retrieve from said storage means a set of program instructions for controlling the transfer of data between said host processing device and a remote processing device controlled by said controller and to transfer this set of program instructions to said controller.

### Brief Description of the Drawings

An embodiment of the invention will now be described by way of example with reference to the accompanying drawings, in which :

Fig. 1 is a block diagram of a data processing system in which the present invention is incorporated ;

Fig. 2 is a block diagram of a communication controller used in the data processing system of Fig. 1 ;

Fig. 3 is a schematic representation of a rotary switch included in the controller of Fig. 2 for generating binary signals representing the address of the controller ;

Fig. 4 is a flow chart of some of the events which occur during a power-up operation of the controller of Fig. 2 ; and

Fig. 5 is a flow chart of some of the events which occur during a power-up operation of a host processor included in the system of Fig. 1.

### Best Mode for Carrying Out the Invention

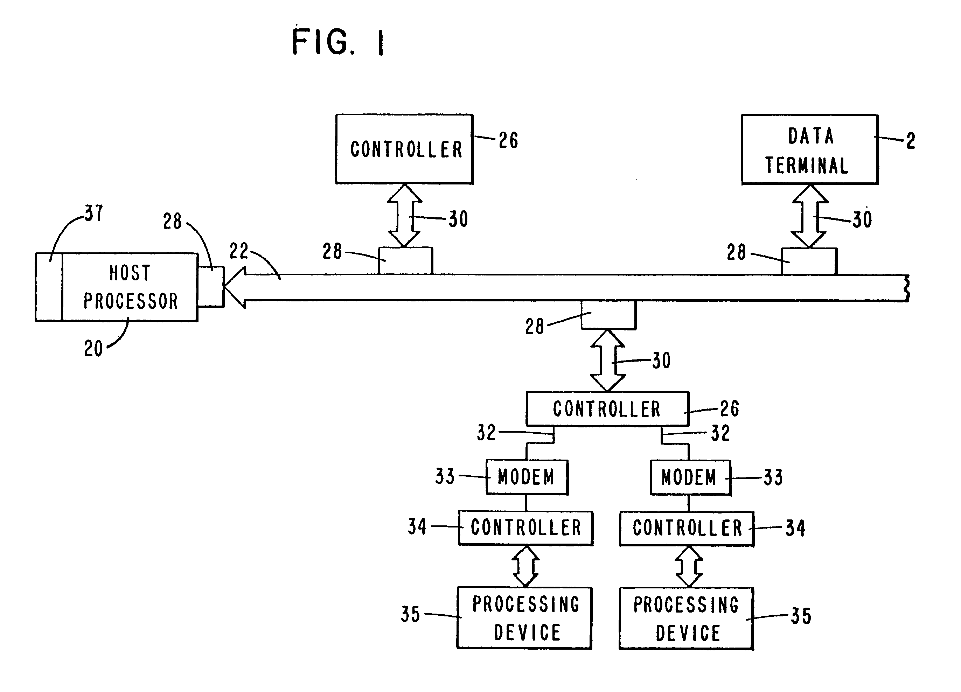

Referring to Fig. 1, there is shown a block diagram of a data processing system in which a host processor 20 is coupled over a communication channel or link 22 to a plurality of remote processing devices which include a plurality of data terminal devices 24 (only one of which is shown in Fig. 1) and communication controllers 26 which control the transfer of data between the terminal devices 24 and the host processor 20. Each controller 26 and each terminal device 24 is connected to the channel 22 through a tap box 28 and a bus 30, and also the host processor 20 is connected to the channel 22 through a tap box 28. Each of the controllers 26 is capable of being coupled over communication lines 32 through modems 33 to remote controllers 34 which in turn control the transferring of data between the host processor 20 and processing devices such as data terminal devices 35 which are more remote from the host processor 20 than are the devices 24, the devices 35 being connected to the remote controllers 34. A disk file memory 37 connected to the host processor 20 has stored therein a look-up table which contains a plurality of sets of program instructions with different types of communication protocols such as A sync, bi-sync and bit sync that are used by the processing devices in transferring data over the channel 22.

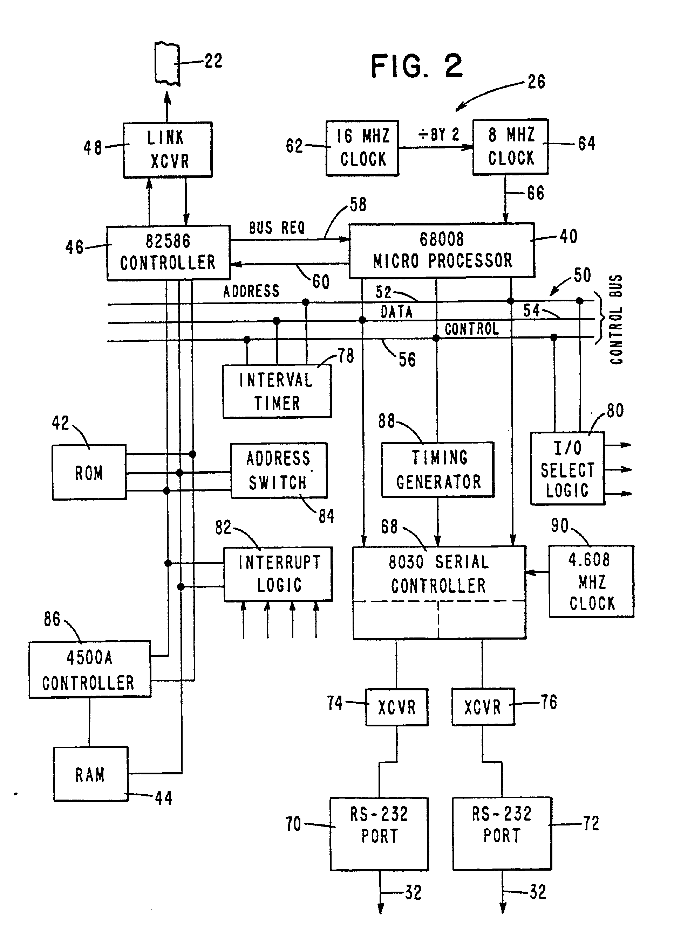

Referring now to Fig. 2, the controller 26 shown therein includes a Motorola 68008 microprocessor 40 which is commercially available from the Motorola Corporation of Phoenix, Arizona, U.S.A. The microprocessor 40 is supported by a 32K ROM memory 42 and a 32K dynamic RAM memory 44. An Intel 82586 controller device 46 which is commercially available from the Intel Corporation of Santa Clara, California, U.S.A., interfaces the controller 26 through a link transceiver 48 to the communication channel 22. The controller 46 also interfaces with a local control bus generally indicated by the numeral 50 which includes an address line 52, a data line 54 and a control line 56. The controller 46 is also connected to the microprocessor 40 over a bus request line 58 and a bus granted line 60. Clock generators 62 and 64 supply 8 Mhz clock signals over line 66 to the microprocessor 40.

Further included in the controller 26 is a Zilog Z8030 serial controller 68 which controls the transfer of data through transceivers 74 and 76, and over a pair of RS-232 ports, and over lines 32 to the remote controllers 34 (Fig. 1). The serial controller 68 is commercially available from the Zilog Corporation of Santa Clara, California, U.S.A. The lines 32 are normally connected to the controllers 34 for use in transferring data between the controller 68 and the processing devices 35 associated with the controllers 34 in a manner that is well known in the art. The controller 68 is capable of supporting a large variety of communication protocols such as SDLC/HDLC, asynchronous data formats, and all RS232 type synchronous formats including character, byte and bit oriented protocols. Further included in the controller 26 are an interval timer 78, an I/O select logic circuit 80, an interrupt logic circuit 82 and an address switch 84, the details of which will be described more fully hereinafter. Associated with the RAM memory 44 is a Texas Instruments TWS4500A controller 86, while a timing generator 88 and a 4.608 MHZ clock source 90 are associated with the serial controller 68. The controller 86 is commercially available from the Texas Instruments Corporation of Dallas, Texas, U.S.A.

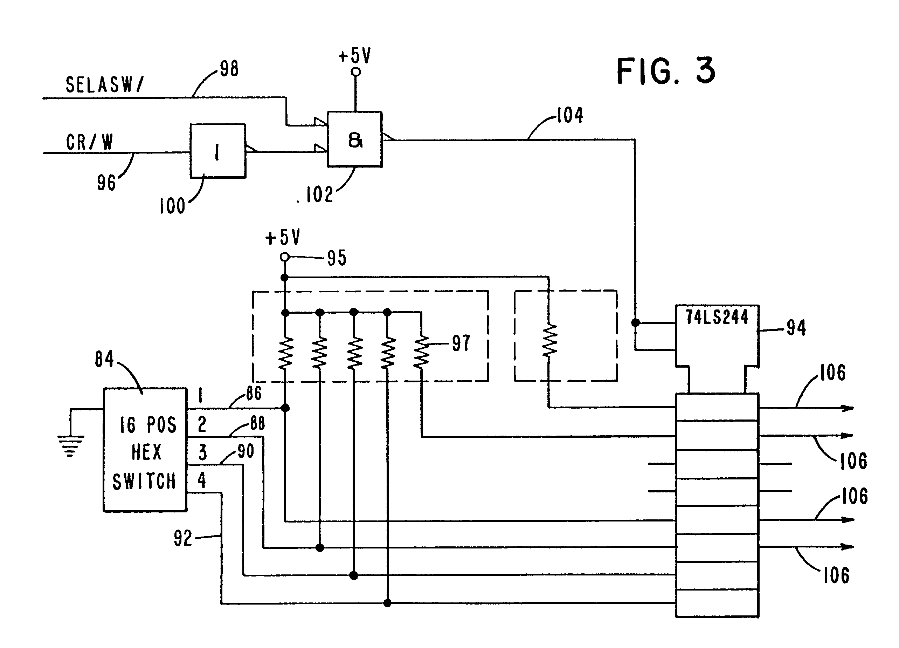

Referring now to Fig. 3, there is shown a schematic diagram of the address switch 84 (Fig. 2). The switch 84 comprises a 16 position hexadecimal rotary switch which is manually set to provide the address of the respective controller 26. The switch 84 is commercially available from ALPS USA of Rockville Center, N.Y., U.S.A. as Part No. SRQH010. The setting of the switch 84 results in a four bit binary word, representing the address of the controller 26, appearing on the output lines 86-92 inclusive of the switch which is transmitted to a 74LS244 buffer member 94. The binary signals for each of the output lines are derived from a 5-volt power source 95 applied through a respective pull-up resistor 97. The buffer member 94 is enabled by a signal CR/W appearing on a control line 96 of the control bus 50 (Fig. 2) and a signal SELASW/ appearing on a control line 98. These signals are outputted by the microprocessor 40 and the I/O select logic circuit 80 respectively. When the signal SELASW/ is low, the buffer member 94 will be enabled to output on lines 106 the binary signals applied to the buffer 94 on input lines 86-92 inclusive, upon the signal CR/W going high. The signal CR/W is transmitted through an inverter gate 100 and into one input of an AND gate 102 which also receives the signal SELASW/ on line 98. The AND gate 102 will output a control signal over line 104 to the buffer 94, enabling the buffer to output the binary signals appearing on input lines 86-92 inclusive over the output lines 106 to the microprocessor 40.

It should be understood that the address switches 84 of the various controllers 26 are manually set so that each controller 26 has a different address.

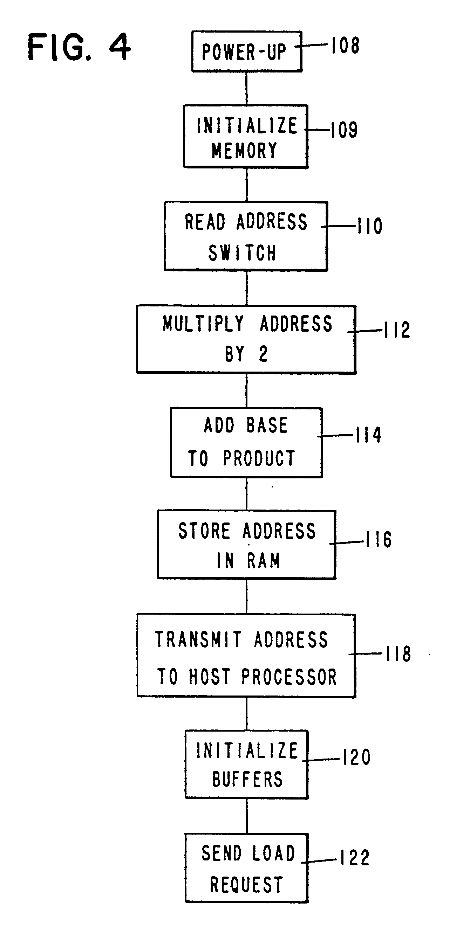

Referring now to Fig. 4, there is shown a flow diagram of the events which occur during a power-up operation of a selected controller 26. Upon the application of power (block 108) to the selected controller 26, the respective microprocessor 40 will initialize the memory 44 (block 109) and read (block 110) the binary signals appearing on the output lines 106 (Fig. 3) of the buffer 94. The microprocessor 40 will then multiply the address value read by two (block 112) and add 190 to the product (block 114) to obtain an address identifying the selected controller 26. The microprocessor 40 will then store the address in the RAM memory 44 (block 116), and the controller 46 will transmit the address (block 118) as part of an identification message to the host processor 20. The microprocessor 40 will then initialize buffers (not shown) in the RAM memory 44 (block 120) preparatory to receiving the data from the host processor 20, which data includes the communication protocol for the selected controller 26. After the buffers in the RAM memory 44 have been initialized, the microprocessor 40 will send a message to the host processor 20 requesting (block 122) data for use in its operation.

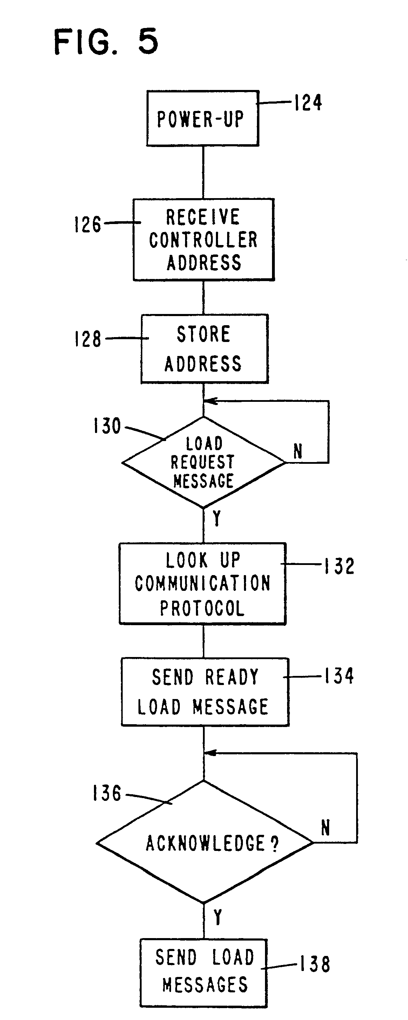

The host processor 20, during a power-up operation (block 124) (Fig. 5), will wait until it receives a power up message (block 126) from the selected controller 26 identifying the controller, which message includes the controller address. The host processor 20 will then store the power up message including the address (block 128) in a RAM memory located in the processor (not shown) and wait (block 130) until it receives a message from the controller 26 requesting a load message. By sending this request, the controller 26 indicates that the RAM memory 44 (Fig. 2) is ready to receive the load data. The host processor 20 then retrieves the controller address from its storage in memory, and using this address to address the table 37 (Fig. 1), located in the processor 20, will obtain the communication protocol instructions (block 132) stored in the look-up table 37 assigned to the controller 26. The processor then sends a message (block 134) to the controller 26 indicating that it is ready to download the data. After receiving an acknowledge message (block 136) from the controller indicating that it is ready to receive the data, the host processor 20 proceeds to transmit the data message including the instructions for the particular communication protocol (block 138) assigned to the controller 26 to the controller where it is stored in the RAM memory 44 (Fig. 2). This procedure will be repeated with respect to any communication controller that is coupled to the host processor 20.

## Claims

1. A data processing system for transmitting data between a host processing device (20) and a plurality of remote processing devices (24, 35), including a communication channel (22) coupled to said host processing device, characterized by storage means (37) coupled to said host processing device (20) for storing a plurality of sets of program instructions corresponding to a number of different communication protocols, and a plurality of controllers (26) coupled to said communication channel (22) for controlling the transfer of data between said host processing device (20) and said remote processing devices (24, 35), each controller (26) including : manually settable switch means (84) settable to a plurality of positions in each of which said switch means causes said controller to output data representing different address data ; and processing means (40) arranged to transmit over said communication channel (22) to said host processing device (20) the address data determined by said switch means (84) so as to enable said host processing device, using this address data, to retrieve from said storage means (37)a set of program instructions for controlling the transfer of data between said host processing device and a remote processing device controlled by said controller (26) and to transfer this set of program instructions to said controller.

2. A data processing system according to claim 1, characterized in that said switch means (84) comprises a rotary switch member.

3. A data processing system according to either claim 1 or claim 2, characterized in that said switch means (84) is arranged to generate identifying data in the form of a plurality of binary signals.

4. A data processing system according to claim 3, characterized in that the identifying data comprises a fourbit binary word.

5. A data processing system according to any of the preceding claims, characterized in that said storing means (37) has a look-up table stored therein.

## Ansprüche

1. Datenverarbeitungssystem zur Übertragung von Daten zwischen einer zentralen Verarbeitungseinrichtung (20) und einer Vielzahl von entfernten Verarbeitungseinrichtungen (24, 35) mit einem Nachrichtenkanal (22), der mit der zentralen Verarbeitungseinrichtung verbunden ist, gekennzeichnet durch eine Speichervorrichtung (37), die mit der zentralen Verarbeitungseinrichtung (20) zum Speichern einer Vielzahl von Gruppen von Programmbefehlen entsprechend einer Anzahl unterschiedlicher Nachrichtenprotokolle gekoppelt ist, und eine Vielzahl von Steuereinheiten (26), die mit dem Nachrichtenkanal (22) zum Steuern der Übertragung von Daten zwischen der zentralen Verarbeitungseinrichtung (20) und den entfernten Verarbeitungseinrichtungen (24, 35) gekoppelt ist, wobei jede Steuereinheit (26) aufweist : eine manuell einstellbare Schaltervorrichtung (84), die in eine Vielzahl von Positionen einstellbar ist, in denen die Schaltervorrichtung bewirkt, daß die Steuereinheit Daten abgibt, die unterschiedliche Adressendaten darstellen ; und eine Verarbeitungsvorrichtung (40), die angeordnet ist, über den Nachrichtenkanal (22) zu der zentralen Verarbeitungseinrichtung (20) die durch die Schaltervorrichtung (84) bestimmten Adressendaten zu übertragen, um die zentrale Verarbeitungseinrichtung in die Lage zu versetzen, unter Verwendung dieser Adressendaten aus der Speichervorrichtung (37) eine Gruppe von Programmbefehlen zur Steuerung der Übertragung der Daten zwischen der zentralen Verarbeitungseinrichtung und einer entfernten Verarbeitungseinrichtung unter Steuerung durch die Steuereinheit (26) herauszuholen und diese Gruppe von Programmbefehlen zu der Steuereinheit zu übertragen.

2. Datenverarbeitungssystem nach Anspruch 1, dadurch gekennzeichnet, daß die Schaltervorrichtung (84) ein Drehschalterelement aufweist.

3. Datenverarbeitungssystem nach Anspruch 1 oder Anspruch 2, dadurch gekennzeichnet, daß die Schaltervorrichtung (84) angeordnet ist, um identifizierende Daten in der Form einer Vielzahl von Binärsignalen zu erzeugen.

4. Datenverarbeitungssystem nach Anspruch 3, dadurch gekennzeichnet, daß die Identifizierungsdaten ein Vier-Bit-Binärwort umfassen.

5. Datenverarbeitungssystem nach einem der vorhergehenden Ansprüche, dadurch gekennzeichnet, daß die Speichervorrichtung (37) eine Aufruftabelle gespeichert hat.

## Revendications

1. Système de traitement de données pour la transmission de données entre un dispositif de traitement central (20) et plusieurs dispositifs de traitement éloignés (24, 35), comprenant un canal (22) de communication couplé au dispositif de traitement central, caractérisé par des moyens (37) de mémorisation couplés audit dispositif de traitement central (20) pour mémoriser plusieurs jeux d'instructions de programmes correspondant à un nombre de protocoles de communication différents, et plusieurs contrôleurs (26) couplés audit canal (22) de communication afin de commander le transfert de données entre ledit dispositif de traitement central (20) et lesdits dispositifs de traitement éloignés (24, 25), chaque contrôleur (26) comprenant : un moyen (84) de commutation positionnable manuellement pouvant être placé dans plusieurs positions dans chacune desquelles ledit moyen de commutation amène ledit contrôleur à délivrer des données représentant des données d'adresses différentes : et des moyens de traitement (40) agencés pour transmettre par ledit canal (22) de communication, audit dispositif de traitement central (20), les données d'adresses determinées par ledit moyen de commutation (84) afin de permettre audit dispositif de traitement central, en utilisant ces données d'adresses, d'extraire desdits moyens de mémorisation (37) un jeu d'instructions de programme pour commander le transfert de données entre ledit dispositif de traitement central et un dispositif de traitement éloigné commandé par ledit contrôleur (26), et de transférer ce jeu d'instructions de programme audit contrôleur.

2. Système de traitement de données selon la revendication 1, caractérisé en ce que ledit moyen de commutation (84) comprend un élément rotatif de commutation.

3. Système de traitement de données selon la revendication 1 ou la revendication 2, caractérisé en ce que ledit moyen de commutation (84) est agencé de façon à générer des données d'identification sous la forme de plusieurs signaux binaires.

4. Système de traitement de données selon la revendication 3, caractérisé en ce que les données d'identification comprennent un mot binaire à quatre bits.

5. Système de traitement de données selon l'une quelconque des revendications précédentes, caractérisé en ce que lesdits moyens de mémorisation (37) renferment en mémoire une table à consultation.

# FIG. 1

# FIG. 2

FIG. 3

# FIG. 4

POWER-UP —108

INITIALIZE MEMORY —109

READ ADDRESS SWITCH —110

MULTIPLY ADDRESS BY 2 —112

ADD BASE TO PRODUCT —114

STORE ADDRESS IN RAM —116

TRANSMIT ADDRESS TO HOST PROCESSOR —118

INITIALIZE BUFFERS —120

SEND LOAD REQUEST —122

# FIG. 5

```
                    ┌──────────────┐
                    │   POWER-UP   │──── 124
                    └──────────────┘
                            │
                            │
                    ┌──────────────┐
        126 ────────│   RECEIVE    │
                    │  CONTROLLER  │
                    │   ADDRESS    │
                    └──────────────┘
                            │
                            │
                    ┌──────────────┐
        128 ────────│    STORE     │
                    │   ADDRESS    │
                    └──────────────┘
                            │
                            ▼
                         ◇        ◇
        130 ──────    ◇    LOAD    ◇
                   ◇   REQUEST    ◇ ── N
                    ◇  MESSAGE   ◇
                         ◇      ◇
                            │ Y
                    ┌──────────────┐
                    │   LOOK UP    │
                    │COMMUNICATION │──── 132
                    │   PROTOCOL   │
                    └──────────────┘
                            │
                    ┌──────────────┐
                    │  SEND READY  │──── 134
                    │ LOAD MESSAGE │
                    └──────────────┘
                            │
                            ▼
                         ◇        ◇
        136 ──────    ◇            ◇
                   ◇              ◇ ── N
                    ◇ ACKNOWLEDGE? ◇
                         ◇      ◇
                            │ Y
                    ┌──────────────┐
                    │  SEND LOAD   │──── 138
                    │   MESSAGES   │
                    └──────────────┘
```